(19) 

**Europäisches Patentamt**

**European Patent Office**

**Office européen des brevets**

(11) **EP 4 415 419 A1**

(12) **EUROPEAN PATENT APPLICATION**

(43) Date of publication:
**14.08.2024  Bulletin 2024/33**

(21) Application number: **24305209.9**

(22) Date of filing: **08.02.2024**

(51) International Patent Classification (IPC):
**H04W 28/02** (2009.01)    **H04L 47/263** (2022.01)
**H04L 47/27** (2022.01)    **H04L 47/35** (2022.01)

(52) Cooperative Patent Classification (CPC):
**H04W 28/02; H04L 47/263; H04L 47/27;
H04L 47/35; H04W 28/0284; H04W 28/0289**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023  US 202363484384 P
02.08.2023  US 202363517329 P**

(71) Applicant: **QORVO US, INC.
Greensboro, NC 27409 (US)**

(72) Inventor: **PERRAUD, Eric
Greensboro, NC 27409 (US)**

(74) Representative: **D Young & Co LLP
3 Noble Street
London EC2V 7BQ (GB)**

(54) **SYSTEM AND METHOD FOR DYNAMIC ADAPTION IN DATA TRANSFER IN ULTRA-WIDEBAND COMMUNICATION**

(57)     A method for optimizing data transfer in UWB communication is provided. The method includes: receiving, from a UWB device, one or more first application data packets as a first part of a sequence of application data packets, the sequence having a first number of application data packets; determining a receiver status value based on the one or more first application data packets; comparing the receiver status value to a threshold value; and determining a second number of application data packets for the sequence based on a difference between the receiver status value and the threshold value. The second number is different from the first number. The method also includes generating a message indicating the second number of application data packets for the sequence; and transmitting the message to the UWB device.

FIG. 1A

## Description

### FIELD OF THE DISCLOSURE

The present disclosure relates to ultra-wideband (UWB) communication between UWB devices, in particular, to a system and method for dynamic adaptation in data transfer in UWB communication.

### BACKGROUND

Ultra-wideband (UWB) is a wireless communication technology that uses a wide bandwidth, typically about 500MHz or larger, or has a 10dB bandwidth greater than 20% of the center frequency. Impulse UWB (IR-UWB) is a specific case of UWB in which the signal is transmitted by very short pulses (in the order of nano seconds). It is particularly adapted for ranging or sensing application as the pulses are robust against multipath. Another advantage of IR-UWB is its ability to transmit data with low power consumption and low latency.

Ranging is a process of determining the distance between two devices using UWB technology. The FiRa (Fine Ranging) consortium was established to ensure interoperability between UWB enabled devices and enable various use cases. FiRa originally focused on ranging, but has introduced data transfer functionalities in recent years. Initially, data transfer was introduced as an add-on to ranging session: short packets were piggy-backed to ranging messages. However, the resource allocated for the data transfer between two UWB devices is not optimized due to lack of communication between the two UWB devices. This can cause waste of resources and result in slow performance, data collision, and overloading on the UWB device(s).

### SUMMARY

Particular aspects are set out in the appended independent claims. Various optional embodiments are set out in the dependent claims.

Examples of the present approaches may provide for improvement in allocation of resources for data transfer between UWB devices so as to facilitate faster and more reliable data transfer while maintaining reasonable workload on the UWB device(s).

Embodiments of the disclosure provide a method for optimizing data transfer in UWB communication. The method includes: receiving, from a UWB device, one or more first application data packets as a first part of a sequence of application data packets, the sequence having a first number of application data packets; determining a receiver status value based on the one or more first application data packets; comparing the receiver status value to a threshold value; and determining a second number of application data packets for the sequence based on a difference between the receiver status value and the threshold value. The second number is different from the first number. The method also includes generating a message indicating the second number of application data packets for the sequence; and transmitting the message to the UWB device.

In some embodiments, the method includes, in response to the receiver status value being equal to or greater than the threshold value, the first number is decreased or maintained such that the second number is less than or equal to the first number. In some embodiments, the method includes, in response to the receiver status value being less than the threshold value, the first number is increased such that the second number is greater than the first number.

In some embodiments, in response to the receiver status value being equal to or greater than the threshold value, the number of second application data packets is less than a difference between the first number and a number of the first application data packets. In some embodiments, in response to the receiver status value being less than the threshold value, the number of second application data packets is greater than the difference between the first number and the number of the first application data packets.

The method further includes storing the one or more first application data packets in a memory. The receiver status value includes a storage space of the one or more first application data packets in the memory and the threshold value includes a threshold storage space.

In some embodiments, the threshold storage space is one of a predetermined percentage of the memory or a predetermined percentage of a total storage space corresponding to the sequence of the first number of application data packets.

In some embodiments, the threshold storage space is equal to or greater than 50%, e.g., a predetermined value/percentage, of the memory, or equal to or greater than 50% of the total storage space corresponding to the sequence of the first number of application data packets; and the storage space is equal to or greater than the threshold storage space.

In some embodiments, the number of the second application data packets is equal to zero.

In some embodiments, the threshold storage space is less than 50%, e.g., a predetermined value/percentage, of the memory, or equal to or greater than 50% of the total storage space corresponding to the sequence of the first number of application data packets; and the storage space is less than the threshold storage space.

In some embodiments, the receiver status value includes a throughput at a UWB control interface (UCI) computed based on the first application data packets; and the threshold value includes a threshold bandwidth.

In some embodiments, the method further includes: receiving one or more other sequences from one or more other connections, each of the other sequences having a plurality of application data packets; computing a respective throughput at the UCI for each of the connection and other connections; determining at least one of the throughputs at the UCI to be higher than the threshold bandwidth; comparing a priority of a connection for the sequence with priorities of the one or more other connections for the one or more other sequences; and determining the connection for the sequence has a lowest priority. The threshold bandwidth is equal to or greater than 50%, e.g., a predetermined value/percentage, of a maximum throughput at the UCI.

In some embodiments, the maximum number of second application data packets is equal to zero.

In some embodiments, the method further includes: receiving one or more other sequences from one or more other connections, each of the other sequences having a plurality of application data packets; computing a respective throughput at the UCI for each of the connection and other connections; determining at least one of the throughputs at the UCI to be lower than the threshold bandwidth; comparing a priority of a connection for the sequence with priorities of the one or more other connections for the one or more other sequences; and determining the connection for the sequence has a highest priority. The threshold bandwidth is less than 50%, e.g., a predetermined value/percentage, of a maximum throughput at the UCI.

In some embodiments, the method further includes, prior to the determining of the number of second application data packets to be transmitted, receiving a message from the UWB device requesting for an adjustment of a bitrate.

In some embodiments, the receiver status value includes a central processing unit (CPU) usage; and the threshold value includes a predetermined threshold percentage of CPU usage.

In some embodiments, the method further includes: receiving one or more other sequences from one or more other connections, each of the other sequences having a plurality of application data packets; comparing a priority of a connection for the sequence with priorities of the one or more other connections for the one or more other sequences; and determining the connection for the sequence has a lowest priority. The threshold CPU usage is equal to or greater than, e.g., 50% (e.g., a predetermined value/percentage) of a maximum CPU usage; and the CPU usage is equal to or greater than the threshold CPU usage.

In some embodiments, the number of the second application data packets is zero.

In some embodiments, the method further includes receiving one or more other sequences from one or more other connections, each of the other sequences having a plurality of application data packets; comparing a priority of a connection for the sequence with priorities of the one or more other connections for the one or more other sequences; and determining the connection for the sequence has a highest priority. The threshold CPU usage is less than 50%, e.g., a predetermined value/percentage, of a maximum CPU usage; and the CPU usage is less than the threshold CPU usage.

In some embodiments, the method further includes, prior to the determining of the second number of application data packets in the sequence, receiving a second message from the UWB device requesting for the second number of application data packets in the sequence to be transmitted.

In some embodiments, the message is a link layer message.

Embodiments of the present disclosure provides a method for adjusting data transfer in ultra-wideband (UWB) communication. The method includes: transmitting one or more first application data packets as a first part of a sequence of application data packets, the sequence having a first number of application data packets; receiving, from a UWB device, a message containing a second number for the application data packets in the sequence, the second number being different from the first number; and adjusting a number of second application data packets to be transmitted as a second part of the sequence such that the second number of application data packets is to be transmitted as the sequence.

In some embodiments, in response to the second number of application data packets being less than or equal to the first number of application data packets, the number of the second application data packet is between zero and a difference between the first number and the second number. In some embodiments, in response to the second number of application data packets being greater than the first number of application data packets, the number of the second application data packet is greater than the difference between the second number and the first number.

Embodiments of the present disclosure provide a method for optimizing data transfer in ultra-wideband (UWB) communication. The method includes transmitting a first number of application data packets; receiving acknowledgement messages for a second number of application data packets; and determining a transmitter status value based on at least one of the first number of application data packets or the second number of application data packets.

In some embodiments, the method further includes: retransmitting a third number of application data packets of which the acknowledgement messages are not received; receiving acknowledgement messages for a fourth number of retransmitted application data packets; and determining a fifth number of application data packets of which acknowledgement messages are not received. The determining of the transmitter status value is further based on one or more of the third number of retransmitted application data packets, the fourth number of retransmitted application data packets, or the fifth number of application data packets.

In some embodiments, the transmitter status value includes at least one of a ratio between the second number and the first number, a ratio between the fourth number and the first number, or a ratio between the fifth number and the first number.

In some embodiments, the method further includes transmitting a message having the transmitter status value to a UWB device.

In some embodiments, the message is a link layer message.

In some embodiments, the method further includes: determining a second transmitter status value after the transmitting of a previous transmitter status value; and transmitting a second message having the second transmitter status value after a predetermined period of time after the transmitting of the message.

In some embodiments, the message is transmitted periodically.

In some embodiments, the method further includes adjusting a modulation rate for transmitting a sixth number of application data packets based on the transmitter status value.

Embodiments of the present disclosure provide a method for optimizing data transfer in ultra-wideband (UWB) communication. The method includes: receiving a transmitter status value indicating a transmission condition of a UWB device for a first time period; and allocating time slots for transmitting application data packets in a second time period subsequent to the first time period based on the transmitter status value.

In some embodiments, the transmitter status value includes at least one of a first ratio, a second ratio, and/or a third ratio. The first ratio is between a number of application data packets transmitted by the UWB device in the first time period and a number of application data packets of which acknowledgement messages are received after first transmissions by the UWB device. The second ratio is between the number of application data packets transmitted by the UWB device in the first time period and a number of application data packets of which acknowledgement messages are received after retransmissions by the UWB device. The third ratio is between a number of application data packets of which acknowledgement messages are not received by the UWB device and the number of application data packets transmitted by the UWB device in the first time period and a number of application data packets of which acknowledgement messages are received after first transmissions by the UWB device.

In some embodiments, the method further includes not allocating time slots for retransmission to the UWB device in response to the first ratio being equal to 1.

In some embodiments, the transmitter status value is received in a link layer message.

Those skilled in the art will appreciate the scope of the present disclosure and realize additional aspects thereof after reading the following detailed description of the illustrative embodiments in association with the accompanying drawing figures.

## BRIEF DESCRIPTION OF THE DRAWING FIGURES

The accompanying drawing figures incorporated in and forming a part of this specification illustrate several aspects of the disclosure, and together with the description, serve to explain the principles of the disclosure.

FIG. 1A illustrates an example system of two UWB devices for implementing dynamic adaptation for data transfer, according to some aspects of the present disclosure.

FIG. 1B illustrates an example architecture of a UWB device for implementing dynamic adaptation for data transfer, according to some aspects of the present disclosure.

FIG. 1C illustrates frames structures used in UWB communication, according to some aspects of the present disclosure.

FIG. 2A illustrates a scenario in which a UWB device transmits a receiver status PDU to another UWB device for dynamic adaptation in data transfer, according to some aspects of the present disclosure.

FIG. 2B illustrates an example data frame with a receiver (Rx) status PDU for dynamic adaptation in data transfer, according to some aspects of the present disclosure.

FIG. 3A illustrates a scenario in which a UWB device transmits a transmitter status PDU to another UWB device for dynamic adaptation in data transfer, according to some aspects of the present disclosure.

FIG. 3B illustrates an example data frame with a transmitter (Tx) status PDU for dynamic adaptation in data transfer, according to some aspects of the present disclosure.

FIG. 3C illustrates slot allocation for data transfer for different phases, according to some aspects of the present disclosure.

FIG. 3D illustrates an example of air time as a function of link layer (LL) packet size at different modulation rates, according to some aspects of the present disclosure.

FIGS. 4A and 4B each illustrates a method for implementing dynamic adaptation in data transfer using Rx status information in UWB communication, according to some aspects of the present disclosure.

FIGS. 5A and 5B each illustrates a method for implementing dynamic adaptation in data transfer using Tx status information in UWB communication, according to some aspects of the present disclosure.

## DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. Additionally, like reference numerals denote like features throughout specification and drawings.

It should be appreciated that the blocks in each signaling diagram or flowchart and combinations of the signaling diagrams or flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each signaling diagram or flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction for performing the functions described in connection with a block(s) in each signaling diagram or flowchart. Since the computer program instructions may be equipped in a computer or other programmable data processing devices, instructions that generate a process executed by a computer as a series of operational steps are performed by the computer or other programmable data processing devices and operate the computer or other programmable data processing devices may provide steps for executing the functions described in connection with a block(s) in each signaling diagram or flowchart.

Each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

Hereinafter, embodiments are described in detail with reference to the accompanying drawings. Further, although a communication system using ultra-wideband (UWB) is described in connection with embodiments, as an example, the embodiments may also apply to other communication systems with similar technical background or features. For example, a communication system using Bluetooth or ZigBee may be included therein. Further, embodiments may be modified in such a range as not to significantly depart from the scope of the present disclosure under the determination by one of ordinary skill in the art and such modifications may be applicable to other communication systems.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known, also referred to as anchor devices). The present disclosure assumes that the user is carrying a device capable of communicating through UWB (referred to as "UWB-enabled device" or simply as "UWB device"). More generally, the present disclosure assumes communication between two UWB devices.

In the present disclosure, a UWB communication session (or data session) may include a plurality of rounds (or ranging rounds), a round may include a plurality of phases (or data phases), and a phase may include a plurality of time slots. A communication session, a round, a phase, and a time slot can each be referred to as a time period. In this present disclosure, the term "time slot" and the term "slot" can be used interchangeably.

In data transfer, a controller UWB device (or simply controller) acts as the central scheduler to decide how time slots (or interchangeably, slots, in this disclosure) can be allocated for data transfer to a controlee UWB device (or simply controlee) in both directions, downlink (DL, from controller to controlee) and Uplink (UL, from controlee to controller). A controlee sends and receives data in frames that are transmitted in the slots allocated by the controller. As disclosed in U.S. Provisional Application No. 63/512,210, which is incorporated herein in its entirety, a controlee can report to the controller status of their buffers, e.g., data queues in the receiver buffer and/or transmitter buffer of the controlee's so that the controller can allocate time slots (or simply slots) for data transfer from the controlee. However, the slot allocation is static, which can cause inefficient use of slots, slow data transfer, data collision, and overloading on the controlee and/or the controller. For example, the existing buffer control does not solve the following issues. In the following description, a transmitter (e.g., one of a controller and a controlee) transmits data packets to a receiver (e.g., the other one of the controller and the controlee).

First, receiver memory constraints may exist. The transmitter transmits data packets (e.g., LL PDUs (packet data units)) to the receiver. If some LL PDUs are not successfully received, the received PDUs are stored in the memory of the receiver until the missing LL PDUs are retransmitted, and the received LL PDUs can make an in-sequence chain of LL PDUs. The memory needs can grow up to LL Window Size × Max LL PDU Size, where the LL Window Size is the maximum number of LL PDUs transmitted by the transmitter without receiving an acknowledgement (ACK), and Max LL PDU size refers to the maximum storage capacity needed for a LL PDU or to the maximum amount of data which can be transmitted in a slot. This memory need can reach or exceed the on-chip memory capacity of the UWB chip, and put constraints on the software (SW) memory management of the host of the receiver.

Also, UWB throughput can get too high. For example, on the receiver side, the UWBS-host(upper layers) interface or UWB control interface (UCI) may be very busy or the host may be slow so that it can't drain and consume the received data packets or LL PDUs, causing data congestion and loss at this interface.

Further, the static slot allocation is done by the controller. The data transfer is done over multiple phases which are scheduled at periodic interval. Before the start of every phase, the controller LL may allocate the time slot to the controlees participating the data session for the upcoming phase. This slot allocation often includes the maximum number of retransmissions per PDU for each connection. The slot allocation is often static per phase (e.g., the slots of a given phase are pre-allocated and the allocation does typically not change in a given/current phase). Therefore, if the UWB channel is very clean (e.g., low noise and/or low interference), the chances of retransmissions are low, and slots allocated for retransmission are not needed. The slots are then wasted in this phase/connection, although they can be useful for another connection. Further, the buffer control does not provide a solution to adapt the bitrate to reduce the airtime and the risk of collisions. For example, if there are more than one UWB devices in the neighborhood active in local UWB networks (not coordinated), there is a higher risk of data collision.

Embodiments of the present disclosure improves the data transfer (e.g., the transfer of LL application PDUs) between two UWB devices (e.g., a transmitter and a receiver) such that one or both of the UWB devices can use certain status data to optimize the data transfer. A receiver and/or a transmitter of the two UWB devices may each obtain certain status data reflecting the transmission from its own perspective on the data transfer, and may use the status data to suggest/adjust certain parameters for the data transfer between the two UWB devices. The status data may be used as feedback to allow the UWB device(s) to optimize the data transfer by reducing waste of resources, reducing data collision in a channel, and reducing overloading on one or more UWB devices. In this disclosure, one UWB device (the receiver or the transmitter) may send a LL PDU, e.g., a LL status PDU, containing a status value, to the other one of the UWB device (the other one of the receiver or the transmitter), when the data transfer needs to be improved. For example, certain parameters associated with the data transfer may be computed and processed in real-time (or on a predetermined time interval basis) for a UWB device to determine whether the data transfer needs to be improved. The criteria and implementation of the methods for the optimization are described as follows.

For example, to solve the problems of receiver memory constraints and high throughput, the receiver can transmit a message containing a novel LL Rx status PDU, where the receiver proposes a smaller LL window size (e.g., the number of LL data packets/frames transmits by the transmitter without the transmitter receiving an acknowledgement (or ACK)) to the transmitter. By this means, the transmitter may transmit less data or stop transmitting data before receiving an ACK, and the max amount of data that needs to be stored in the receiver's on-chip memory can be lower. Also, the effective throughput, which is viewed by the host (or the upper layers of the transmitter) or the UWB control interface (or UCI) of the receiver, and determined by equation

$$\frac{LL\ Window\ Size \times Application\ PDU\ size}{Average\ Scheduled\ ACK\ delay}$$

, can be reduced. In some embodiments, the transmitter is a controller and has multiple connections with multiple controlees. The UWB device may determine the effective throughput of one or more connections at the UCI, and sends a LL Rx status PDU to a connection of a lower priority to reduce the LL window size of the connection. In various embodiments, the receiver may transmit the LL Rx status PDU either autonomously or upon a host request (e.g., from the transmitter or the receiver).

To solve the problem of static slot allocation, a transmitter may first detect if the UWB channel is clean or what the average retransmission ratio per PDU is. For example, if all its transmitted LL application PDUs are positively acknowledged at the first transmission, the transmitter determines that the channel is clean, and the transmitter does not need to retransmit its LL PDUs. The transmitter may send a message containing a LL Tx status PDU, to the controller (e.g., the receiver). The LL Tx status PDU may contain information (e.g., ACK status) to determine the number of slots needed for retransmissions of a LL application PDU in the latest phase/round. The receiver (e.g., controller) may then allocate the slots for the transmitter (e.g., controlee) for the next phase based on the information contained in the LL Tx status PDU.

To solve the problem of data collision and poor transmission quality, a UWB device (e.g., the transmitter) may adjust its bitrate based on a LL Tx status PDU containing the ACK status transmitted by another UWB device (e.g., the receiver). If the ACK status show many negatively acknowledged LL application PDUs and a high number of LL application PDUs that need retransmission versus the LL application PDUs that are positively acknowledged at the first transmission, the UWB device may determine that there are an undesirably large number of collisions. The UWB device may increase the physical layer (PHY) bitrate to reduce the airtime. Alternatively or additionally, a UWB device may not transmit a LL Tx status PDU. Instead, the UWB device may use the ACK status to evaluate the transmission quality, and reduce the PHY bitrate if the transmission quality is low. In existing UWB community systems, the bitrate is the same and unchanged for all the UWB devices in a session. The present disclosure proposes multiple bitrates to be allowed per session such that a UWB device can flexibly adjust its bitrate based on recent transmission condition to reduce collision.

The present disclosure provides a LL Rx status PDU (or LL signaling PDU) to adjust the LL window size for data transfer. The new LL Rx status PDU is sent if the size of the needed memory on the receiver side increases too much, the received throughput is too fast for the receiving application, or the CPU load of the receiver is too high. By adapting the LL window size, the optimal end-to-end throughput can be searched continuously, and the memory constraints are under control. The present disclosure also provides a LL Tx status PDU (or LL signaling PDU) to indicate the suggested number of slots for retransmissions or the statistics of transmission on the transmitter side (e.g., the controlee) to the receiver (e.g., the controller) so that the controller can optimize the UWB slot allocation. By suggesting the maximum number of retransmissions to bias the slot allocation algorithm, the UWB slot allocation can be optimized and no slots are allocated for retransmissions when retransmission is not needed. Also, dynamic adaptation of the transmission bitrate can be implemented based on the received LL ACK status to reduce the airtime and hence the probability of data packet collision. By using LL ACK status to adapt the transmitted bitrate, the connection can be more robust.

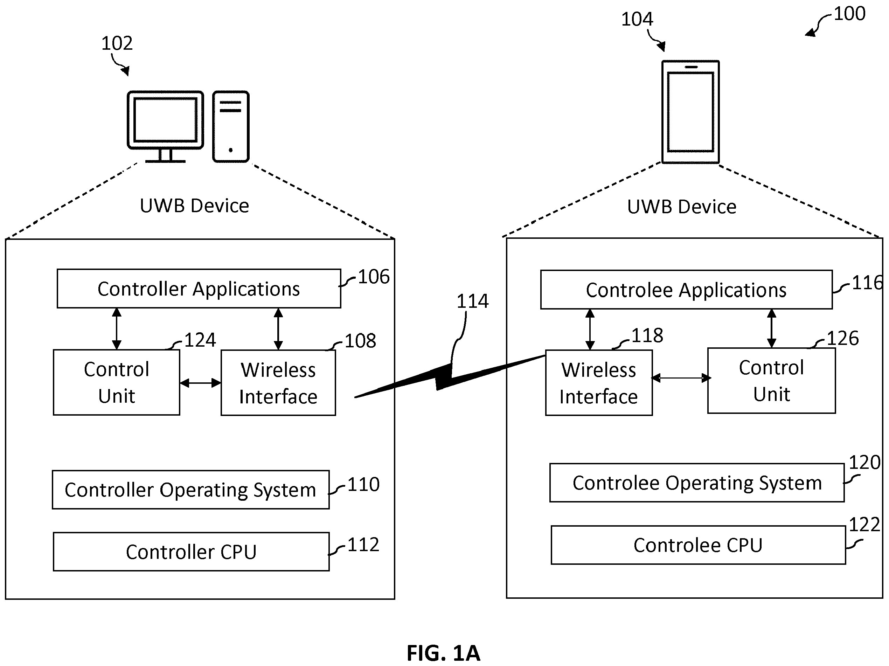

FIG. 1A depicts an example system 100 for implementing the dynamic adaption in data transfer in UWB communication, according to some embodiments of the present disclosure. The system 100 may include a UWB device 102 that is in wireless communication with another UWB device 104, as symbolically illustrated by a wireless link 114. UWB device 102 may be the controller UWB device (or simply controller), and UWB device 104 may be the controlee UWB device (or simply controlee) in the wireless communication. In this disclosure, the controller may be one of a transmitter and a receiver, and the controlee may be the other one of the transmitter and the receiver. UWB device 102 may be an on-board computer or a mobile device. In some embodiments, UWB device 104 is a mobile device. For example, UWB device 102 may be a device for contactless payment installed at a POS, and UWB device 104 may be a user mobile device. It is noted here that the terms "mobile device," "mobile handset," "wireless handset," and "User Equipment (UE)" may be used interchangeably hereinbelow to refer to a wireless communication device that is capable of voice and/or data communication. Some examples of such mobile handsets include smartphones, tablets, and wearable devices. It is observed here that, UWB device 102 may not have to be a separate computing unit (in hardware or software form) dedicated to carry out the dynamic adaptation functionality. In one embodiment, the functionality of the UWB device 102 may be implemented in an already-existing physical computing/data processing unit or (nonphysical) server software in a cloud. The wireless link 114 may include a UWB communication interface. The wireless link 114 may also support other types of wireless connections, such as a Bluetooth communication interface, a Wi-Fi communication interface, a cellular network connection (e.g., 4G, 5G) interface, a near field communication (NFC) interface, a ZigBee communication interface, or a combination thereof.

A control unit 124/126 is one of the mobile applications respectively installed in the UWB device 102/104. In addition to control unit 124/126, UWB devices 102 and 104 may each also have one or more mobile applications (e.g., controller applications 106/controlee applications 116) reside therein. These mobile applications are software modules that may have been pre-packaged with the respective UWB device 102/104 or may have been downloaded by a user into the memory (not shown) of the respective UWB device 102/104. For example, UWB device 102 may also store in its memory (not shown) other controller-specific applications such as, for example, an application that facilitates Ethernet-based communication, an application that interacts with cloud, and the like. In some embodiments, control units 124 and 126 perform the dynamic adaptation in data transfer for UWB communication. For example, control units 124 and 126 may generate and process control packets (e.g., LL status PDUs) that are transmitted between UWB devices 102 and 104 for dynamic adaptation functions. Detailed description is included below. The mobile applications as well as the control units (e.g., 124 and 126) may be executed by the processors respectively under the control of the mobile operating systems (e.g., controller operating system 110 and controlee operating system 120). UWB device 102 may include a relatively high-powered controller Central Processing Unit (CPU) 112 executing controller operating system 110. UWB device 102 may further include a wireless interface 108 to facilitate wireless communication with UWB device 104 via the wireless link 114. The applications (e.g., 106 and 124) may utilize the wireless interface 108 as needed.

Because of the battery-powered nature of mobile devices, in some embodiments, the processor of UWB device 104 (e.g., a controlee CPU 122) may be designed to conserve battery power, such as a relatively low-powered CPU. UWB device 104 may wirelessly communicate with the UWB device 102 via its own wireless interface 118. The wireless interfaces units 108 and 118 may wirelessly transfer data or information between the UWB device 102 and the UWB device 104 using the wireless link 114 as shown.

In operation, a UWB device (e.g., 102 or 104) may dynamically adapt to the transmission condition to improve data transfer. In some embodiments, the UWB device is a receiver, and can be a controller or a controlee. The control unit (e.g., 124 or 126) of the UWB device may compute certain metrics reflecting the current data transfer of LL application PDUs, and compare these metrics with pre-determined threshold values. Based on the result of the comparison, the UWB device may generate a message embedded with a LL Rx status PDU that contains a suggested LL window size if the LL application PDU being transmitted is occupying too much/little space in the on-chip memory of the UWB system (e.g., UWBS or UWB chip) of the receiver's, using too much/little resource in the CPU (e.g., 112 or 122), or causing overload/underload on the UWB control interface (UCI) between the host (or upper layers or applications 106/116) and the UWBS. The UWB device may transmit the message to another UWB device (e.g., the transmitter) through wireless link 114. The transmitter, receiving the suggested LL window size, may adjust its LL window size, e.g., for transmitting the LL application PDUs (e.g., through wireless link 114) to the receiver, to alleviate the stress/burden on the receiver.

In some embodiments, the UWB device is a controlee. The control unit (e.g., 126) of the UWB device may compute certain metrics reflecting the retransmission information of the current data transfer of LL application PDUs. In some embodiments, the UWB device computes statistical data reflecting certain retransmission ratio(s) of LL application PDUs of one or more previous phase(s) from a transmitter's perspective (e.g., the total slots need to transmit a certain set of LL application PDUs), and may suggest to the other UWB device (e.g., the controller) the computed statistical data via a LL PDU transmitted through wireless link 114. The controller may then allocate slots based on the actual needs of the controlee (e.g., reflected in the computed statistical data) for the next phase of data transfer to reduce the waste of time slots. In some embodiments, the UWB device can be a controller or a controlee.

The control unit (e.g., 124 or 126) may compute the statistical data reflecting certain retransmission ratio(s) and adjust the modulation/data rate for transmitting the LL application PDUs based on the retransmission ratio(s) to shorten airtime, reduce data collisions, and/or improve transmission quality in the UWB channel.

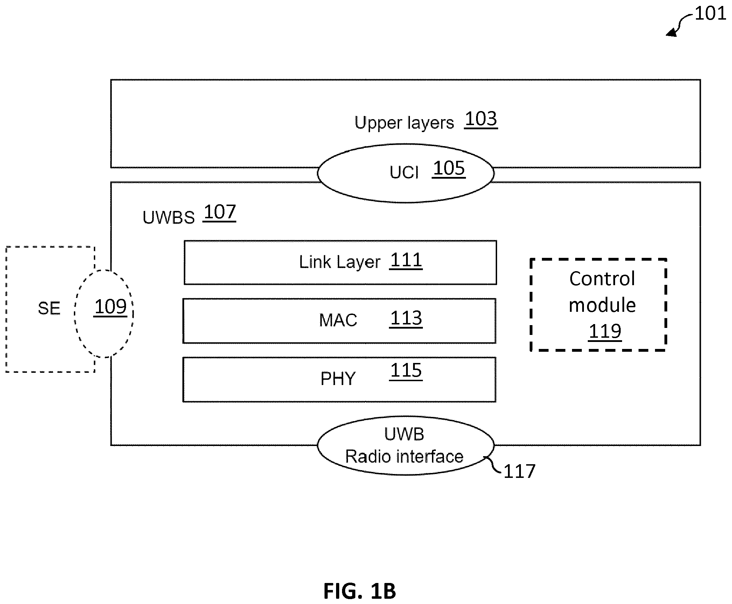

FIG. 1B illustrates a diagram of the architecture (e.g., layered view) of a UWB device 101, according to some embodiments of the present disclosure. UWB device 101 may be an example of UWB devices 102 and 104. As shown in FIG. 1B, UWB device 101 may include one or more upper layers 103 (e.g., host of UWB device 101), a UWB control interface (UCI) 105, a secure element (SE) interface 109, a link layer 111, a medium access control (MAC) layer 113, a physical (PHY) layer 115, a UWB radio interface 117, and a control module 119. In some embodiments, UCI 105, link layer 111, MAC layer 113, PHY layer 115, SE interface 109, and UWB radio interface 117 may be referred to as a UWB system (UWBS) 107 (or UWB chip). The UWBS 107 and upper layers 103 may communicate via UCI 105.

PHY layer 115 is configured to transport data (e.g., packets such as control packets and data packets) using its interfaces, such as UWB radio interface 117. PHY layer 115 provides electrical, mechanical, and/or procedural interfaces to the transmission medium. MAC layer 113 is configured to control the hardware responsible for interaction with the wired, optical, and/or wireless transmission medium. Link layer 111 is configured to provide method and communication protocols confined to the link that UWB device 101 is connected to. For example, link layer 111 generates packets by framing data bits such as source and destination addresses, information to detect and control transmission errors, message types, and indication of receiver (Rx)/transmitter (Tx) status to the data stream. Link layer 111 is the layer which adapts the data from upper layers 103 to the MAC frames, manages transmission, and retransmission to deliver a loss-less connection. The loss-less connection is often configured by two parameters: max number of retransmissions and LL window size.

SE interface 109 allows UWBS 107 to directly communicate with an SE through link layer 111, MAC layer 113, PHY layer 115, and SE interface 109. Upper layers 103 may include layers above link layer 111, such as network layer, transport layer, session layer, presentation layer, and application layer, each having its respective functionality for UWB system communication. Upper layers 103 communicate with UWBS 107 through UCI 105. UCI 105 may allow the host (e.g., UWB device 101) to configure and control UWBS 107 and gather data form UWBS 107, and may allow the UWBS 107 to receive application data and/or configuration parameters from upper layers 103.

Control module 119 may control the functions of link layer 111. For example, control module 119 may control the generating, receiving, and analyzing the link layer control messages. Control module 119 may be a dedicated entity for the control of link layer 111, or may be part of a more general control entity of UWB device 101 for controlling various other layers. For example, control module 119 may perform part or the entirely functions of control unit 124 (and/or control unit 126). For example, control module 119 may include any suitable hardware and/software that can control link layer 111. In an embodiment, control module 119 is implemented by an on-chip processor of UWBS 107. In some embodiments, control module 119 is implemented by the general processor of UWB device 101 (or host). Control module 119 may allow the packets transmitted between two UWB devices to be parsed and executed at the link layer level, without having to be transmitted and parsed at a higher layer level. In some embodiments, control module 119 is communicatively connected to upper layers 103 to gather/receive data and/or configuration parameters. On the transmitter side, control module 119 may use the gathered/received information to construct the LL header and adding the LL header to the LL PDU. On the receiver side, control module 119 may use the gathered/received data to parse the received LL headers and determine the operations to be done, accordingly.

Control module 119 may configure the Rx or Tx status data based on the current data transfer and related metrics. For example, control module 119 may configure the Rx status data based on the on-chip memory usage, the computed user throughput at UCI 105, and/or the processor usage of UWBS 107. In another example, control module 119 may configure the Tx status data based on buffer status data (e.g., LL application PDUs transmitted and to be transmitted) and ACK's received for the transmitted data. Control module 119 may construct a LL status PDU to include the Rx status (e.g., resulting in a LL Rx status PDU) or the Tx status (e.g., resulting in a LL Tx status PDU), and transmit it to another UWB device through UWB radio interface 117. Additionally or alternatively, control module 119 may use the Tx status to adjust the bitrate and airtime.

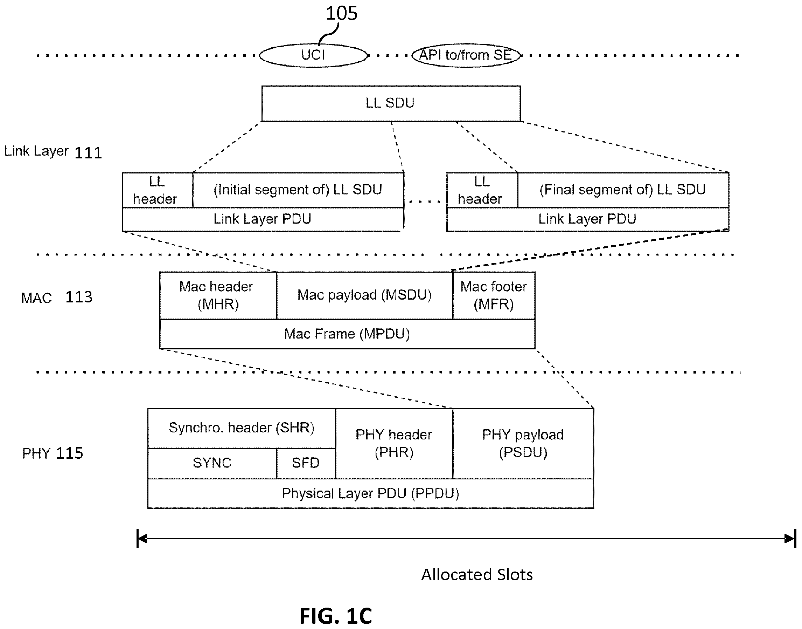

FIG. 1C illustrates a process to form a packet for transmission through different layers of a UWB device. A packet, including various data such as user data or application data, may be transmitted from upper layers (e.g., upper layers 103) and/or secure element to the UWB radio interface (e.g., UWB radio interface 117). As shown in FIG. 1C, on the transmitter side, a data payload (e.g., link layer service data unit or LL SDU) may be provided to the UWBS (e.g., UWBS 107) through the UCI (e.g., UCI 105) to the link layer (e.g., link layer 111). The payload can be segmented and a LL header may be appended to the segment. The LL header and the segment may form the LL packet data unit (PDU). The LL PDU may then be then transmitted to the MAC layer (e.g., MAC layer 113). The LL PDU may then be embedded into a MAC payload (or MAC SDU or MSDU). The MSDU may be appended to a MAC header and a MAC footer, forming a MAC frame or MAC protocol data unit (MPDU). The MPDU may be transmitted to the PHY layer (e.g., PHY layer 115). The MPDU may then be embedded into a PHY payload (or physical layer convergence procedure SDU or PSDU). The PSDU may be appended to a PHY header and a synchronization header (or SHR), forming a physical layer protocol data unit or (PPDU). The PPDU may then be transmitted to another UWB device (through the UWB radio interface 117 or the SE interface 109).

On the receiver side, a packet from another UWB device may be received at the PHY layer (e.g., PHY layer 115), and may be parsed at the PHY layer level, the MAC layer level (e.g., MAC layer 113), and the link layer level (e.g., link layer 111). For example, a link layer PDU may be received at the link layer and may be processed.

In the present disclosure, the Rx status and the Tx status are determined by control module 119, and may be constructed in a LL PDU (or LL status PDU). The LL status PDU may then be transmitted as PPDU, and may be parsed at the link layer level by the UWB device receiving the PPDU. The LL PDU allows the UWB devices to construct and parse control packets timelier, without the need to be constructed and processed by the host.

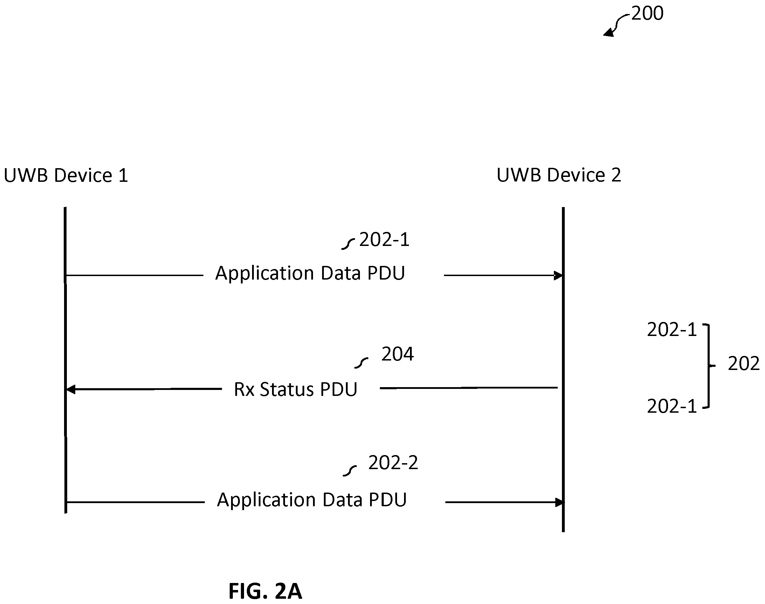

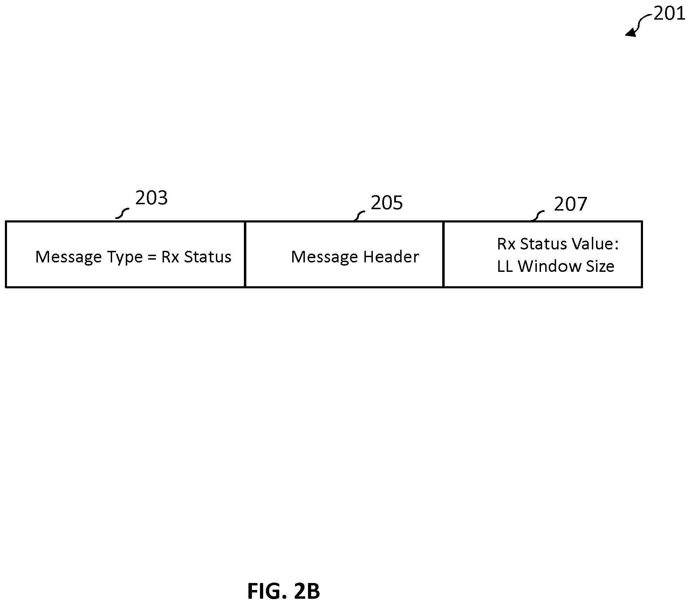

FIG. 2A illustrates a signalling diagram 200 between UWB device 1 (transmitter) and UWB device 2 (receiver), and UWB device 2 transmitting a LL PDU containing Rx status of UWB device 2 to UWB device 1. As shown in FIG. 2A, UWB device 1 transmits Application Data PDU 202-1 (e.g., a LL application PDU) to UWB device 2. Application Data PDU 202-1 may be a first part (e.g., a first number of LL application PDUs) of a sequence 202 of LL application PDUs that UWB device 1 schedules to transmit to UWB device 2. The sequence 202 may include a first number of LL application PDUs to be transmitted in an original LL window. After receiving the Application Data PDU 202-1, UWB device 2 transmits a Rx Status PDU 204 (e.g., a LL Rx status PDU with Rx status of UWB device 2) to UWB device 1. FIG. 2B illustrates an example data frame 201 of Rx status PDU 204, according to some embodiments. As shown in FIG. 2B, data frame 201 is a LL PDU that includes a field 203 "Message Type= Rx Status," a field 205 "Message Header 205," and a field 207 "Rx Status Value: LL Window Size." In some embodiments, the "LL Window Size" of field 207 includes a suggested LL window size that is different from the most recent (or current) LL window size for data transfer. In various embodiments, the suggested LL window size may be greater than or smaller than the current LL window size. Based on Rx Status PDU 204, UWB device 1 may determine to adjust the number of LL application PDUs scheduled to be transmitted as a second part of the sequence 202, e.g., Application Data PDU 202-2, such that the sequence 202 has a second number of LL application PDUs transmitted in a LL window size that matches or is sufficiently close to the suggested LL window size. The second number is different from the first number. The number of LL application PDUs in the second part, e.g., Application Data PDU 202-2, of the sequence 202 may be determined based on the difference between the suggested LL window size and the size of the first part of the sequence 202. In some embodiments, the number of LL application PDUs, e.g., Application Data PDU 202-2, as the second part of the sequence 202 may be equal to zero or smaller than the difference if a smaller LL window size is suggested. In some embodiments, the number of LL application PDUs in the second part of the sequence 202 may be greater than the difference if a larger LL window size is suggested. In some embodiments, the suggested LL window size (or data frame 201) is used as a means for flow control. Below describes different scenarios in which Rx status PDU 204 is employed.

In a first scenario, a UWB device, e.g., a receiver in a UWB communication, may provide the Rx status value for flow-related storage control if the current data transfer results in too much or too little on-chip memory for storage/caching. The receiver may include a suggested LL window size in field 207 to suggest to the transmitter. The suggested LL window size may result in better flow control on the receiver side. For example, the transmitter may transmit a sequence of LL application PDUs (e.g., Application Data PDU 202-1), each having a sequence number or SN, to the receiver in an established connection. Receiving one or more of the LL application PDUs, the receiver may reorder the received LL application PDUs as an in-sequence list (e.g., according to their sequence numbers or SN) to deliver in-sequence data to the upper layers. If a LL application PDU with a SN=n is not received by the receiver, the other LL application PDUs with SNs = n+1, n+2 ... have to be stored in the receiver memory until the LL application PDU with SN=n is retransmitted and received. The number of stored LL application PDUs can increase up to the current LL window size if the receiver is slow to send a status report with a negative acknowledgement (or NACK) for the LL application PDU SN= n which can trigger the retransmission of LL application PDU with SN=n. Alternatively or additionally, the transmitter may not have a time slot allocated for retransmission in a short-term (or current phase). The memory needed from the receiver can then be close to the maximum memory available for the on-chip memory, in particular if the LL application PDUs are large in size. On the other hand, if the received LL application PDUs only occupy a small portion of the on-chip memory, the on-chip may not be used efficiently and the LL window can be larger.

To address this issue, a LL Rx status PDU with a suggested LL window size may be transmitted by the receiver based on the memory constraint on the receiver side. The transmitter, after receiving the LL Rx status PDU with the suggested LL window size, may update/adjust the current LL window size to be: Minimum (local/transmitter's LL Tx window, suggested LL window by the receiver), if the received LL application PDUs are taking too much of the on-chip memory. By adjusting the LL window size, the use of the on-chip memory on the receiver side, as well as the data transfer, may be optimized.

In some embodiments, the receiver may determine the on-chip memory used for this connection, and generate the LL PDU (e.g., 201) with a Rx status value using the following criteria:

    1) memory used for this connection >= X0 kB; or
    2) memory used for this connection < Y0 kB.

In some embodiments, if criterion 1) is met, the receiver may generate the LL Rx status PDU to suggest a smaller LL window size. The transmitter may continue to transfer few or zero LL application PDUs, e.g., PDUs that are awaiting an acknowledgement, if criterion 1) is met. In this case, the sequence of LL application PDUs received and stored by the receiver is shorter (e.g., having fewer total LL application PDUs) than the length of the original sequence (e.g., to be transmitted in the current LL window size before adjustment). In some embodiments, if criterion 2) is met, the receiver may generate the LL Rx status PDU to suggest a larger LL window. The transmitter may continue to transfer LL application PDUs until the suggested window size is reached. In this case, the sequence of LL application PDUs received by the receiver is longer (e.g., having more total LL application PDUs) than the length of the original sequence.

X0 and Y0 may each be a predetermined threshold value. In some embodiments, X0 may be a desirably high percentage (e.g., equal or greater than 50%, such as 52%, 55%, 60%, 65%, 70%, 75%, 80%, 85%, 90%, 95%, 98%, etc.) of the maximum available on-chip memory for the connection, and Y0 may be a desirably low percentage (e.g., less than 50%, such as 48%, 45%, 40%, 35%, 30%, 25%, 20%, 15%, 10%, 5%, 2%, etc.) of the maximum available on-chip memory for the connection. In some embodiments, instead of percentages, X0 may be a desirably high capacity value, and Y0 may be a desirably low capacity value.

In an example, the receiver may allocate 16kB (e.g., a connection memory) for the connection, with XO=10kB (e.g., 62.5% of the connection memory). Assuming an average LL application PDU size being 1kB and LL application PDU with SN=n missing, LL application PDUs with SN=n+1, ... to SN=n+10 are received and stored/cached in the connection memory. The receiver may then transmit a LL Rx status PDU (e.g., Rx Status PDU 204) with a suggested LL Window = 10 (e.g., in field 207). Receiving the LL Rx status PDU, the transmitter may update its LL Tx window for this connection to 10 and stop sending any new LL application PDUs. In some embodiments, the transmitter may retransmit LL application PDU with SN = n until it is positively acknowledged.

In another example, the current LL window size for the connection may be 16, and X0 is equal to 50%. Assuming an average LL application PDU size being 1kB and LL application PDU with SN=n missing, LL application PDUs with SN=n+1, ... to SN=n+10 are received and stored/cached in the connection memory. Then the receiver will send the LL Rx status PDU with LL Window=8 (e.g., in field 207). Receiving the LL Rx status PDU, the transmitter may update its LL Tx window to 8 and stop sending any new LL application PDUs. In some embodiments, the transmitter may retransmit LL application PDU with SN = n until it is positively acknowledged.

In a second scenario, a UWB device, e.g., a receiver in a UWB communication, may provide the Rx status value for flow-related throughput control if the current data transfer (e.g., the transfer of the first part of the sequence) results in the user throughput to be too high or too low at the UCI (e.g., 105). The receiver may include a suggested LL window size in field 207 to suggest to the transmitter. The suggested LL window size may result in better flow control on the receiver side. In UWB communication, the effective user throughput at the UCI is calculated as

$$T = \frac{LL\ window\ size \times LL\ PDU\ size}{Average\ ACK\ RTT},$$

where LL window size represents the number of LL application PDUs the transmitter transmits without receiving an ACK, the LL PDU size represents the size of a LL application PDU, and Average ACK RTT represents an average round-trip time of an ACK for a LL application PDU. In some embodiments, the UCI (UWBS-host interface) may be overloaded and may not have enough bandwidth to carry the traffic of data. If the traffic on this connection is reduced, it would help the UCI to convey all the application data to the host.

The receiver may be a controller or a controlee. In some embodiments, the receiver may determine the user throughput for a connection at the UCI, and generate a LL Rx status PDU (e.g., Rx Status PDU 204) with a Rx status value using the following criteria:

    1) UCI throughput > X1 Mbps; or
    2) UCI throughput < Y1 Mbps; or
    3) host of the receiver sending to the UWBS a command asking to reduce or increase the transmission bitrate.

In some embodiments, if criterion 1) is met, the receiver may transmit the LL Rx status PDU to the transmitter to suggest a smaller LL window for the connection. In some embodiments, if criterion 2) is met, the receiver may transmit the LL Rx status PDU to the transmitter to suggest a larger LL window for the connection. In some embodiments, if criterion 3) is met, the receiver may transmit the LL Rx status PDU to the transmitter to suggest a smaller or a larger LL window according to the host's command.

X1 and Y1 may each be a predetermined threshold value. In some embodiments, the values of X1 and Y1 may be at least partially dependent on the type of the interface (e.g., UCI) and the capability of the interface. In some embodiments, X1 is a desirably high bandwidth value, and Y1 is a desirably low bandwidth value. In some embodiments, X1 and Y1 may each be a percentage of the maximum throughput capability of the UCI. For example, X1 may be equal to or greater than 50% (e.g., 52%, 55%, 60%, 65%, 70%, 75%, 80%, 85%, 90%, 95%, 98%, etc.) of the maximum throughput at the UCI, and Y1 may be less than 50% (e.g., 48%, 45%, 40%, 35%, 30%, 25%, 20%, 15%, 10%, 5%, 2%, etc.) of the maximum throughput at the UCI.

In some embodiments, the receiver is a controller and may have multiple connections with multiple controlees. The UCI of the controller may have a high overall volume of data to convey to the host (upper layers). The receiver may compute the UCI throughput for one or more connections, and may determine a priority of each of the connections. If the UCI throughput of one or more connections are too high using the above-described criterion, the controller may select one or more connections of lower priorities (e.g., starting from the lowest-priority connection), and transmit a LL Rx status PDU suggesting a reduced LL window size for the selected connection(s). The selected connections may or may not be the connection with the undesirably high throughput/bandwidth at the UCI. The receiver/controller may continue to reduce the LL window size of another low priority connection (in priority ascending order, e.g., the second lowest-priority connection) until the total user throughput at the UCI is reasonably low, and the UCI works in a safe operating mode. If the UCI throughput of one or more connections are too low using the above-described criterion, the controller may select one or more connections of higher priorities (e.g., starting from the highest-priority connection), and transmit a LL Rx status PDU suggesting an increased LL window size for the selected connection(s). The selected connections may or may not be the connection with the undesirably low throughput/bandwidth at the UCI. The controller may continue to increase the LL window size of another connection (in priority descending order, e.g., the second highest-priority connection) until the total user throughput at the UCI is reasonably high, and the UCI works in a safe operating mode. Accordingly, the transmitter, receiving the LL Rx status PDU, may adjust the LL window size, e.g., by adjusting the number of LL application PDUs to be transmitted as the second part (e.g., Application Data PDU 202-2) of the sequence, such that the adjusted sequence/LL window size can result in a more desirable condition for data transfer on the receiver's side.

In a third scenario, a UWB device, e.g., a receiver in a UWB communication, may provide the Rx status value for flow-related CPU control if the current data transfer (e.g., the transfer of the first part of the sequence) results in the usage of CPU to be too high or too low. The receiver may include a suggested LL window size in a LL Rx status PDU (e.g., in field 207) to suggest to the transmitter. In some embodiments, the on-chip CPU of the UWBS may be a CPU with a limited processing capability. The CPU usage of a data stack grows linearly with the PDU rate. Thus, if the number of LL application PDUs per seconds is high, the CPU usage may be high. For example, if the CPU usage exceeds a CPU usage threshold value, the receiver may transmit a LL Rx status PDU (e.g., Rx Status PDU 204) to the transmitter to suggest a smaller LL window size. The receiver may be a controller or a controlee.

In some embodiments, the receiver is a controller, and may have established multiple connections with multiple controlees. The on-chip CPU may be overloaded from processing LL application PDUs from more than one connection. If the CPU usage is too high, the receiver may determine a priority of each of the connections. The receiver may select one or more connections of lower priorities (e.g., starting from the lowest-priority connection), and transmit a LL Rx status PDU suggesting a reduced LL window size for the selected connection(s). The receiver/controller may continue to reduce the LL window size of another low priority connection (in priority ascending order, e.g., the second lowest-priority connection) until the CPU usage is reasonably low. If the CPU usage is too low, the controller may select one or more connections of higher priorities (e.g., starting from the highest-priority connection), and transmit a LL Rx status PDU suggesting an increased LL window size for the selected connection(s). The controller may continue to increase the LL window size of another connection (in priority descending order, e.g., the second highest-priority connection) until the CPU usage is reasonably high. Accordingly, the transmitter, receiving the LL Rx status PDU, may adjust the LL window size, e.g., by adjusting the number of LL application PDUs to be transmitted as the second part (e.g., Application Data PDU 202-2) of the sequence, such that the adjusted sequence/LL window size can result in a more desirable condition for data transfer on the receiver's side. For example, the transmitter may stop transmitting LL application PDUs if the CPU usage is too high.

In some embodiments, the receiver determines the CPU usage to be too high if the CPU usage exceeds a CPU usage threshold value that is a predetermine percentage of the maximum CPU usage such as equal to or greater than 50%, e.g., 52%, 55%, 60%, 65%, 70%, 75%, 80%, 85%, 90%, 95%, 98%, etc. In some embodiments, the receiver determines the CPU usage to be too low if the CPU usage is less than a predetermined percentage of the maximum CPU usage such as less than 50%, e.g., 48%, 45%, 40%, 35%, 30%, 25%, 20%, 15%, 10%, 5%, 2%, etc.

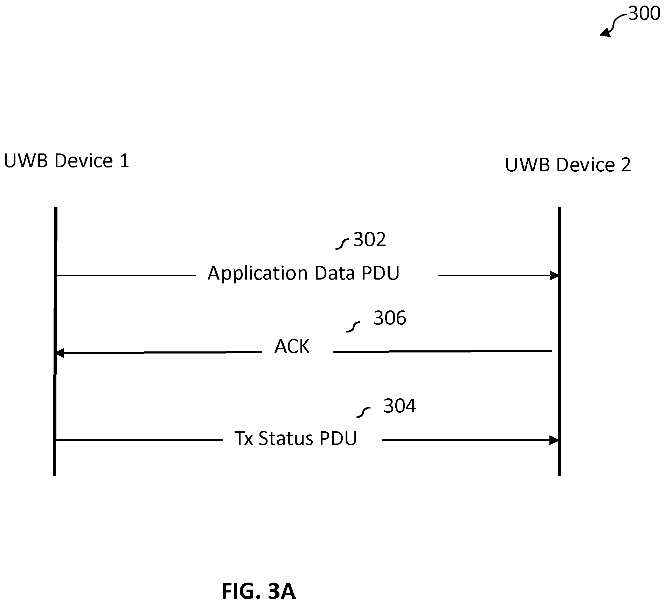

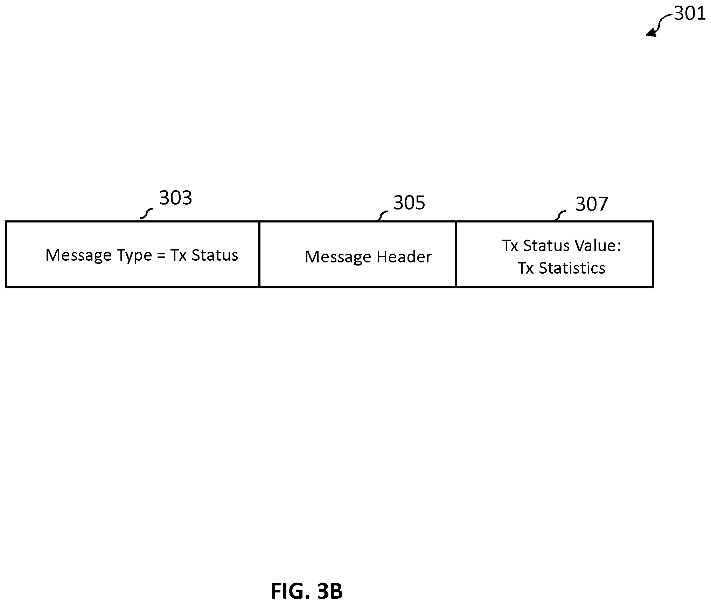

FIG. 3A illustrates a signalling diagram 300 between UWB device 1 (transmitter) and UWB device 2 (receiver), and UWB device 1 transmitting a LL Tx status PDU containing Tx status of UWB device 1 to UWB device 2. As shown in FIG. 3A, UWB device 1 transmits Application Data PDU 302 (e.g., a LL application PDU) to UWB device 2. In some embodiments, UWB device 1 receives an ACK 306 from UWB device 2 for Application Data PDU 302. In some embodiments, UWB device 1 retransmits Application Data PDU 302 if no ACK 306 is received, and/or may or may not receive an ACK for the retransmission. For simplicity, the retransmission and ACK for retransmission are not shown in FIG. 3A. UWB device 1 may also transmit a Tx Status PDU 304 (e.g., a LL Tx status PDU with Tx status of UWB device 1) to UWB device 2. In some embodiments, UWB device 306 does not receive an ACK before transmitting Tx Status PDU 304. FIG. 3B illustrates an example data frame 301 of Tx Status PDU 304, according to some embodiments. As shown in FIG. 3B, data frame 301 is a LL PDU that includes a field 303 "Message Type= Tx Status," a field 305 "Message Header 305," and a field 307 "Tx Status Value: Tx statistical data." In some embodiments, the "Tx statistical data" of field 307 includes statistical data of the transmitter of UWB device 1, which is computed based on the number of LL application PDUs transmitted, retransmitted, and acknowledged in current and/or previous phases. In some embodiments, UWB device 1 is a controlee and UWB device 2 is a controller, and the Tx statistical data is used for optimizing slot allocation by the controller. In some embodiments, UWB device 1 is a controller or a controlee, and does not transmit the Tx statistical data (not shown in the figures). Instead, UWB device 1 may use the Tx statistical data to adjust (e.g., increase or decrease) its physical bitrate. Below describes different scenarios in which data frame 301.

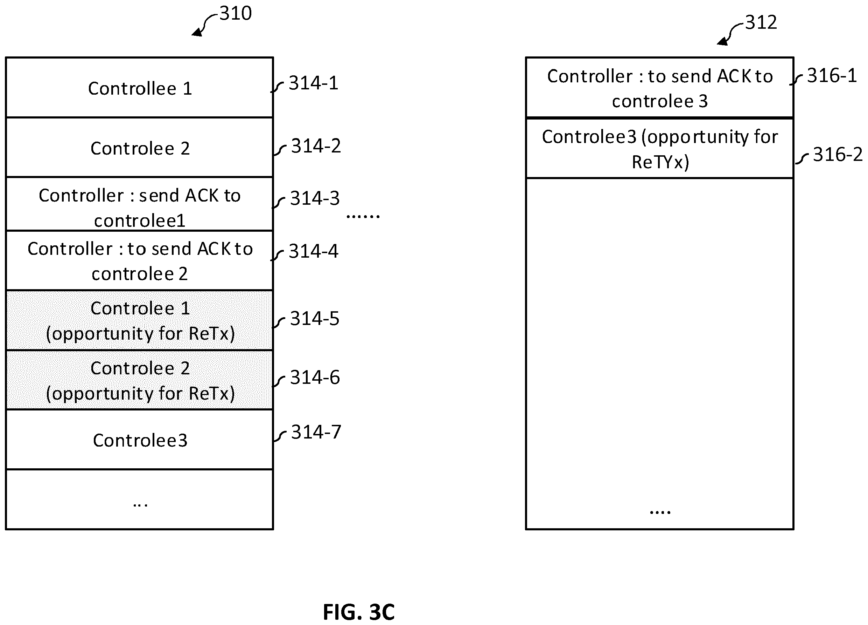

FIG. 3C illustrates a scenario in which a LL Tx status PDU (e.g., Tx status PDU 304) may be used to optimize slot allocation, according to some embodiments. Currently, the slot allocation is done in an a-priori manner by the controller (e.g., UWB device 2) at the beginning a round of transmission that includes N time slots distributed in one or more phases, N being a positive integer. The controlees (e.g., UWB device 1) are informed about the slot allocation for the N time slots by a data transfer control message (DTPCM) message from the controller. For example, as shown in FIG. 3C, at the beginning of phase 310, the controller allocates a plurality of time slots 314-1, 314-2, 314-3, 314-4, 314-5, 314-6, 314-7, ...for communication between the controller and three controlees 1, 2, and 3. Time slots 314-1 and 314-2 are allocated for controlees 1 and 2 to respectively transmit data to the controller. Time slots 314-3 and 314-4 are allocated for the controller to send ACK respectively to controlees 1 and 2. Time slots 314-5 and 314-6 are allocated after time slots 314-1, 314-2, 314-3, and 314-4 for controlees 1 and 2 to respectively retransmit data to the controller if it is needed. Controlee 3 may have data pending for transmission but there is not enough time slots in phase 310. Time slot 314-7 is allocated in phase 310 for controlee 3 to transmit data to the controller. However, there is not enough slots in phase 310 for controlee 3 to transmit all its data. As a result, time slots 316-1 and 316-2 are allocated in phase 312 (e.g., a phase following phase 310) for the controller to send ACK and controlee 3 to retransmit data. In other words, time slots 314-5 and 314-6 are pre-allocated regardless of the need for retransmission, and can be wasted if no retransmission from controlees 1 and 2 are needed. If the controller knows a-priori (before allocating the time slots of data phase 1) that data of controlees 1 and/or 2 do not need time slots for retransmission, the controller may allocate these time slots (e.g., 314-5 and/or 314-6) to controlee 3. Controlee 3 may transmit its pending data in phase 310 and not wait till phase 312. Thus, if the controller has updated information on the statistics on the data transmission and retransmission, it can optimize the slot allocation algorithm and allocate time slots when they are most likely needed based on the statistics. In some embodiments, the controller does not allocate time slots to controlees when they are less likely needed based on the statistics. In various embodiments, the controller may receive the statistics from a controlee or compute the statistics itself/locally. The statistics, received or computed locally, may be used to optimize the slot allocation at the beginning of the next round. In some embodiments, the controlee can transmit Tx Status PDU 304 regularly or at end of a data phase. In some embodiments, the controller can also compute its Tx status regularly or at the end of a data phase.

The Tx statistical data may reflect, to the controller, the statistics about recent LL application PDU transmissions and retransmissions. For example, the Tx statistical data may include but are not limited to the average number of transmissions for a LL application PDU, the minimum number and/or maximum number of transmissions per each LL application PDU needs, etc. In some embodiments, the Tx statistical data may be computed based on the following metrics:

$X0$: Number of transmitted LL application PDU since the last Tx status PDU 304;

$X1$: Number or a percentage of $X0$ of LL application PDUs that have been positively acknowledged at the first transmission;

$X2$: Number or a percentage of $X0$ of LL application PDUs that are positively acknowledged at first retransmission; and

$X3$: Number or a percentage of $X0$ of LL application PDUs that have not been positively acknowledged after one retransmission.

In some embodiments, a controller (e.g., UWB device 2) transmits LL application PDUs to each of one or more controlees (e.g., UWB device 1) in one or more phases. The controlee may send the Tx statistical data to the controller after M transmitted LL application PDUs since the last Tx status PDU 304 (M being a configuration parameter and N being the number of slots distributed in one or more phases, e.g., M=N), and/or in the last slot of the round which the controller has allocated to the controlee. Thus, the controller may have an updated view of the Tx statistical data of all connections in both directions, and accordingly a more complete and regularly updated view of pending data (e.g., waiting for a slot for transmission/retransmission) on all the connections in both directions. It is thus easier for the controller to optimize the usage of the UWB channel.

In an example, at the beginning of a round, the controller determines that the pending data of the connection "controlee k (e.g., UWB device 1) to controller (UWB device 2)" needs $n0$ LL application PDUs to be fully transmitted. The controller may have also received a LL Tx status PDU (Tx Status PDU 304) at the end of last round from controlee k, with Tx Status indicating Tx statistical data from controlee k in the last round. The controller also learns from Tx status PDU 304 that, in the last round, $X0$ is equal to $X1$ for this connection, meaning all the LL application PDUs are successfully transmitted at the first transmission. Thus, the controller may allocate $n0$ time slots to the controlee k for the current round. Referring back to FIG. 3C, time slots 314-5 and 314-6 may not be allocated. In another example, if Tx Stats PDU 304 indicates $X1=0.5\times X0$ and $X2=0.5\times X0$, meaning that a LL application PDU need an average of 1.5 transmissions in the last round, the controller may allocate about $1.5\times n0$ time slots to the controlee k for the connection. In another example, if the Tx Stats PDU 304 indicates that $X1=X2=0$ and that $X3=X0$, then the controller may allocate 2 time slots for retransmissions per each LL application PDU and thus allocate $3\times n0$ time slots to the controlee k for the connection.

In some embodiments, the controller may compute $X0$, $X1$, $X2$, and $X3$ for its own Tx statistical data, similar to above. The controller may use its own Tx statistical data for optimizing the slot allocation for a connection.

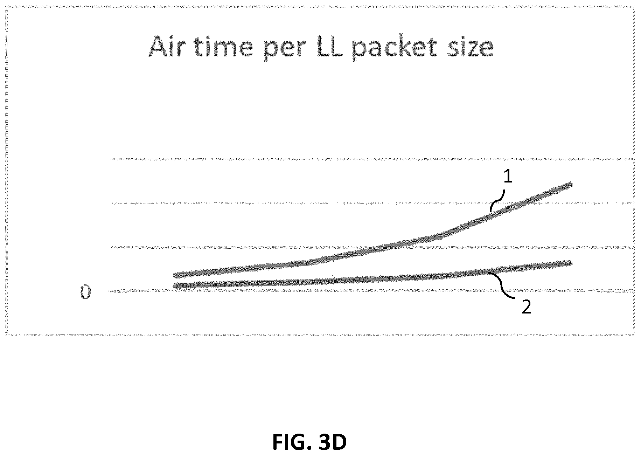

In another scenario, a UWB device may determine its own/local Tx statistical data and use it to adjust/increase the bitrate for data transmission. For example, the UWB channel between a transmitter and a receiver may be heavily loaded, and the Tx statistical data may reflect collisions in the UWB channel. In some embodiments, the transmitter may compute its local statistical data about the number of retransmissions for a given connection, such as the number of LL application PDUs that are successfully transmitted at the first transmission, and the number of LL application PDUs that need one or more retransmissions. The transmitter may compute the Tx statistical data over a sliding window (e.g., a predetermined time window or a window of N latest transmitted LL application PDUs). If some LL application PDUs are positively acknowledged, the transmitter may determine the link budget is good. If the number of LL application PDUs that are retransmitted is significantly higher than the number of LL application PDUs that are positively acknowledged at the first transmission, the transmitter may determine the connection suffers from UWB packet collisions. The transmitter may then select a higher modulation rate (e.g., switching from base pulse repetition frequency (BPRF) to high pulse repetition frequency (HPRF) and/or from 6.8Mbps to 27.2Mbps). After the bitrate adjustment, the transmission duration of a LL application PDU or the number of transmitted LL application PDUs in the UWB channel will be much less, and the probability of collision may decrease. For that purpose, the transmitter may be enabled to choose from more than one physical layer (PHY) bitrates for a session. Then the transmitter may adapt its bitrate based on its recent history of LL Tx statistic data. FIG. 3D illustrates a comparison of air times per LL application packet size between a modulation rate 1 (6.8Mbps) and modulation rate 2 (27.2Mbps). The x axis represents the LL application PDU size, and the y axis represents the air time. FIG. 3D shows the air time decreases significantly as the modulation rate increases.

The transmitter may be a controller or a controlee. In some embodiments, the transmitter is a controlee and may compute its Tx statistical data after N transmitted LL application PDUs or the accumulated Tx statistical data in the preceding round. In an example, if the Tx statistical data shows that $T1 \times X0 < (X1+X2+X3) < T2 \times X0$ (e.g., T1 and T2 being predetermined weighting factors that are less than 100%), the transmitter may determine that the packet error rate is not caused by a poor link budget (otherwise X1+X2+X3 should be close to 100% for a desirably high link budget) but is likely due to UWB collision. In some embodiments, T1 is between 0 and 50%, and T2 is between 50% and 95%. For example, T1 may be 0, 10%, 20%, 25%, 30%, 45%, and 50%; and T2 may be 55%, 60%, 70%, 80%, 85%, and 90%. In some embodiments, T1 is equal to 30% and T2 is equal to 70%. The transmitter may increase the modulation rate for the incoming round. If (X1+X2+X3) is close to X0, the transmitter may determine that the link budget is likely bad (e.g., high noise and/or high interference), and the bad link budget is the cause of the failed transmissions. The transmitter may determine to improve the transmission quality by decreasing the modulation rate.

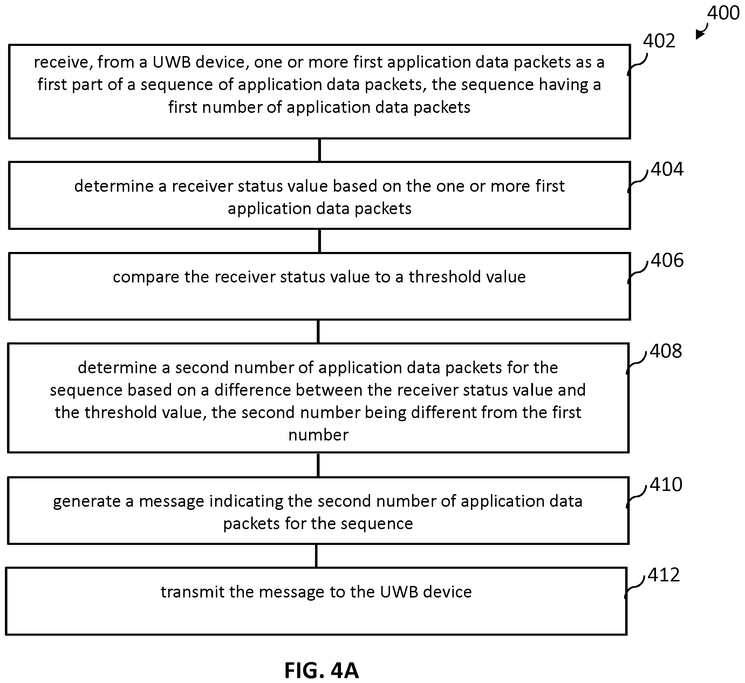

FIG. 4A is a flowchart of a method 400 for UWB device (e.g., a receiver) to implement dynamic adaptation using a LL Rx status PDU in a UWB system, according to some embodiments of the present disclosure. Method 400 is merely an example, and is not intended to limit the present disclosure beyond what is explicitly recited in the claims. Additional operations can be provided before, during, and after the method 400, and some operations described can be replaced, eliminated, or moved around for additional embodiments of method 400. For ease of illustration, FIG. 4A is described in connection with FIGS. 2A and 2B.

At step 402, one or more first application data packets is received as a first part of a sequence of application data packets from a UWB device. The sequence includes a first number of application data packets. Referring back to FIG. 2A, Application Data PDU 202-1 is transmitted as a first part of a sequence in a LL window from UWB device 1 to UWB device 2.

At step 404, a receiver status value is determined based on the one or more first application data packets. Referring back to FIG. 2B, a "Rx Status Value: LL Window Size," e.g., a suggested LL window size, is determined based on Application Data PDU 202-1.

At step 406, the receiver status value is compared to a threshold value.

At step 408, a second number of application data packets for the sequence is determined based on a difference between the receiver status value and the threshold value, the second number being different from the first number.

At step 410, a message is generated indicating the second number of application data packets for the sequence. Referring back to FIG. 2B, a message, e.g., data frame 201, is generated containing a suggested LL window size in field 207.

At step 412, the message is transmitted to the UWB device. Referring back to FIG. 2A, Rx Status PDU 204, which is an example of data frame 201, is transmitted from UWB device 2 to UWB device 1.

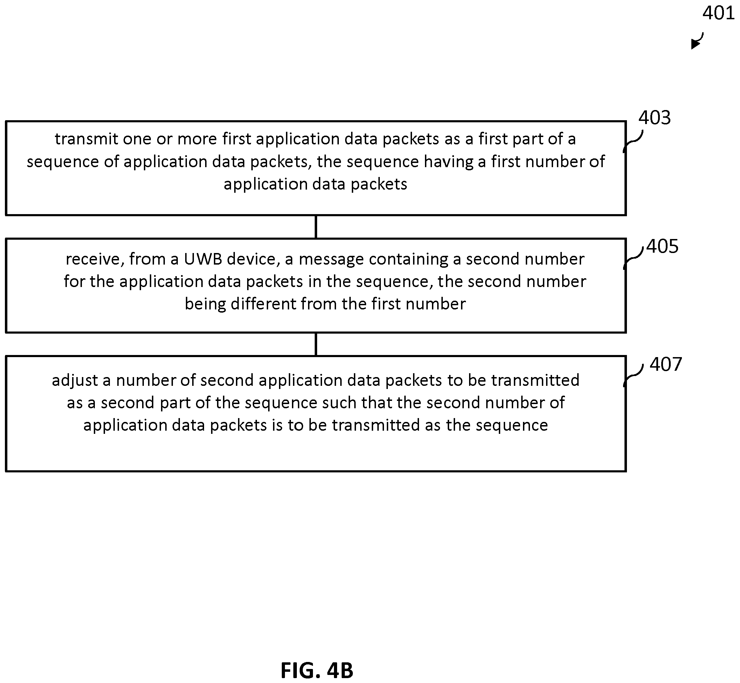

FIG. 4B is a flowchart of a method 401 for UWB device (e.g., a transmitter) to implement dynamic adaptation using a LL Rx status PDU in a UWB system, according to some embodiments of the present disclosure. Method 401 is merely an example, and is not intended to limit the present disclosure beyond what is explicitly recited in the claims. Additional operations can be provided before, during, and after the method 401, and some operations described can be replaced, eliminated, or moved around for additional embodiments of method 401. For ease of illustration, FIG. 4B is described in connection with FIGS. 2A and 2B.

At step 403, one or more first application data packets is transmitted as a first part of a sequence of application data packets. The sequence having a first number of application data packets. Referring back to FIG. 2A, Application Data PDU 202-1 is transmitted as a first part of a sequence in a LL window from UWB device 1 to UWB device 2.

At step 405, a message containing a second number for the application data packets in the sequence is received from a UWB device. The second number is different from the first number. Referring back to FIG. 2B, a message, e.g., data frame 201, is received, by UWB device 1, containing a suggested LL window size in field 207.

At step 407, a number of second application data packets to be transmitted as a second part of the sequence is adjusted such that the second number of application data packets is to be transmitted as the sequence. Referring back to FIG. 2A, Application Data PDU 202-2 may be transmitted as a second part of the sequence.

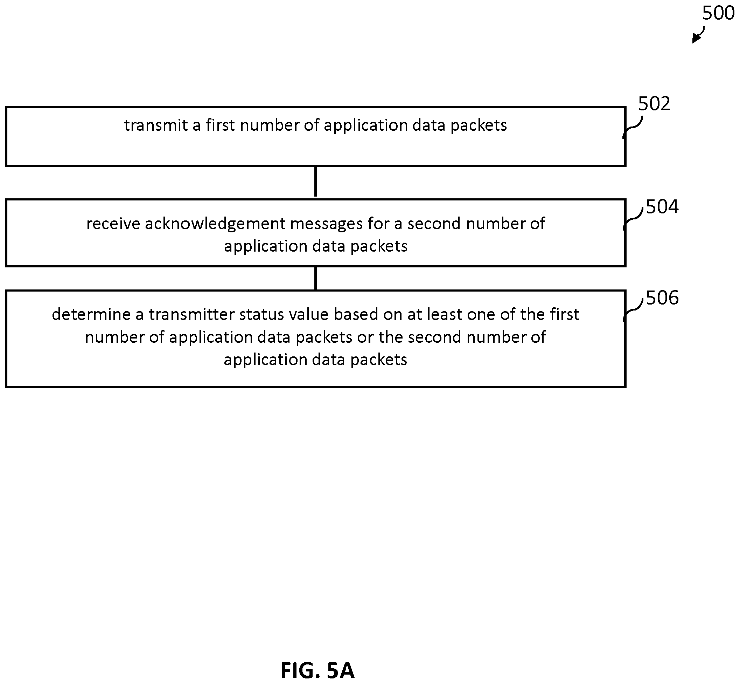

FIG. 5A is a flowchart of a method 500 for UWB device (e.g., a transmitter) to implement dynamic adaptation using a LL Tx status (or LL Tx status PDU) in a UWB system, according to some embodiments of the present disclosure. Method 500 is merely an example, and is not intended to limit the present disclosure beyond what is explicitly recited in the claims. Additional operations can be provided before, during, and after the method 500, and some operations described can be replaced, eliminated, or moved around for additional embodiments of method 500. For ease of illustration, FIG. 5A is described in connection with FIGS. 3A and 3B.

At step 502, a first number of application data packets is transmitted. Referring back to FIG. 3A, Application Data PDU 302 is transmitted from UWB device 1 to UWB device 2.

At step 504, acknowledgement messages are received for a second number of application data packets. Referring back to FIG. 3A, UWB device 1 may receive ACK 306 for a second number of application data packets in Application Data PDU 302.

At step 506, a transmitter status value is determined based on at least one of the first number of application data packets or the second number of application data packets. Referring back to FIGS. 3A and 3B, a Tx status value is determined, e.g., contained in a LL Tx status PDU (e.g., in field 307).

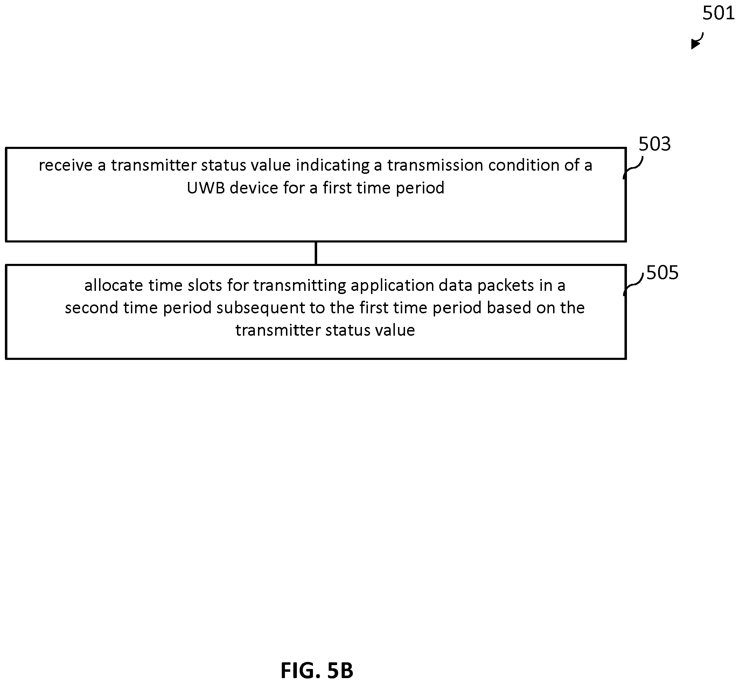

FIG. 5B is a flowchart of a method 501 for UWB device (e.g., a receiver) to implement dynamic adaptation using a LL Tx status (or LL Tx status PDU) in a UWB system, according to some embodiments of the present disclosure. Method 501 is merely an example, and is not intended to limit the present disclosure beyond what is explicitly recited in the claims. Additional operations can be provided before, during, and after the method 501, and some operations described can be replaced, eliminated, or moved around for additional embodiments of method 501. For ease of illustration, FIG. 5B is described in connection with FIGS. 3A-3C.

In step 503, a transmitter status value indicating a transmission condition of a UWB device for a first time period is received. Referring back to FIGS. 3A and 3B, a Tx status value is determined, e.g., contained in a LL Tx status PDU (e.g., in field 307). The Tx status value is received from UWB device 2 to UWB device 1.

In step 505, time slots are allocated for transmitting application data packets in a second time period subsequent to the first time period based on the transmitter status value. As shown in FIG. 3C, time slots are allocated for transmitting application data packets after receiving the Tx status value. In some embodiments, no time slots retransmission is allocated to a controlee if no retransmission is needed.

Therefore, from one perspective, there have been described techniques for optimizing data transfer in UWB communication. A method according to these techniques includes: receiving, from a UWB device, one or more first application data packets as a first part of a sequence of application data packets, the sequence having a first number of application data packets; determining a receiver status value based on the one or more first application data packets; comparing the receiver status value to a threshold value; and determining a second number of application data packets for the sequence based on a difference between the receiver status value and the threshold value. The second number is different from the first number. The method also includes generating a message indicating the second number of application data packets for the sequence; and transmitting the message to the UWB device.

Further examples are set out in the following numbered clauses.

Clause 1. A method for optimizing data transfer in ultra-wideband, UWB, communication, comprising: receiving, from a UWB device, one or more first application data packets as a first part of a sequence of application data packets, the sequence having a first number of application data packets; determining a receiver status value based on the one or more first application data packets; comparing the receiver status value to a threshold value; determining a second number of application data packets for the sequence based on a difference between the receiver status value and the threshold value, the second number being different from the first number; generating a message indicating the second number of application data packets for the sequence; and transmitting the message to the UWB device.

Clause 2. The method of clause 1, comprising: in response to the receiver status value being equal to or greater than the threshold value, decreasing or maintaining the first number such that the second number is less than or equal to the first number; and in response to the receiver status value being less than the threshold value, increasing the first number such that the second number is greater than the first number.

Clause 3. The method of clause 2, wherein: in response to the receiver status value being equal to or greater than the threshold value, decreasing the number of second application data packets to be less than a difference between the first number and a number of the first application data packets; and in response to the receiver status value being less than the threshold value, increasing the number of second application data packets to be greater than the difference between the first number and the number of the first application data packets.

Clause 4. The method of clause 3, further comprising storing the one or more first application data packets in a memory, wherein the receiver status value comprises a storage space of the one or more first application data packets in the memory and the threshold value comprises a threshold storage space.

Clause 5. The method of clause 4, wherein the threshold storage space is one of a predetermined percentage of the memory or a predetermined percentage of a total storage space corresponding to the sequence of the first number of application data packets.

Clause 6. The method of clause 5, wherein: the threshold storage space is equal to or greater than a predetermined percentage of the memory, or equal to or greater than the predetermined percentage of the total storage space corresponding to the sequence of the first number of application data packets; and the storage space is equal to or greater than the threshold storage space.

Clause 7. The method of clause 5, wherein: the threshold storage space is less than a predetermined percentage of the memory, or equal to or greater than the predetermined percentage of the total storage space corresponding to the sequence of the first number of application data packets; and the storage space is less than the threshold storage space.

Clause 8. The method of clause 5, wherein: the threshold storage space is equal to or greater than 50% of the memory, or equal to or greater than 50% of the total storage space corresponding to the sequence of the first number of application data packets; and the storage space is equal to or greater than the threshold storage space.

Clause 9. The method of clause 8, wherein the number of the second application data packets is equal to zero.

Clause 10. The method of clause 5, wherein: the threshold storage space is less than 50% of the memory, or equal to or greater than 50% of the total storage space corresponding to the sequence of the first number of application data packets; and the storage space is less than the threshold storage space.

Clause 11. The method of any of clauses 3-10, wherein: the receiver status value comprises a throughput at a UWB control interface, UCI, computed based on the first application data packets; and the threshold value comprises a threshold bandwidth.

Clause 11. The method of clause 8, further comprising: receiving one or more other sequences from one or more other connections, each of the other sequences having a plurality of application data packets; computing a respective throughput at the UCI for each of the connection and other connections; determining at least one of the throughputs at the UCI to be higher than the threshold bandwidth; comparing a priority of a connection for the sequence with priorities of the one or more other connections for the one or more other sequences; and determining the connection for the sequence has a lowest priority, wherein the threshold bandwidth is equal to or greater than a predetermined percentage of a maximum throughput at the UCI, for example wherein the predetermined percentage is 50%.

Clause 12. The method of clause 11, wherein the maximum number of second application data packets is equal to zero.

Clause 13. The method of clause 11 or 12, further comprising: receiving one or more other sequences from one or more other connections, each of the other sequences having a plurality of application data packets; computing a respective throughput at the UCI for each of the connection and other connections; determining at least one of the throughputs at the UCI to be lower than the threshold bandwidth; comparing a priority of a connection for the sequence with priorities of the one or more other connections for the one or more other sequences; and determining the connection for the sequence has a highest priority, wherein the threshold bandwidth is less than a predetermined percentage of a maximum throughput at the UCI.

Clause 14. The method of any of clauses 3-13, further comprising, prior to the determining of the number of second application data packets to be transmitted, receiving a message from the UWB device requesting for an adjustment of a bitrate.

Clause 15. The method of any of clauses 3-14, wherein: the receiver status value comprises a central processing unit, CPU, usage; and the threshold value comprises a predetermined threshold percentage of CPU usage.

Clause 16. The method of clause 15, further comprising: receiving one or more other sequences from one or more other connections, each of the other sequences having a plurality of application data packets; comparing a priority of a connection for the sequence with priorities of the one or more other connections for the one or more other sequences; and determining the connection for the sequence has a lowest priority, wherein: the threshold CPU usage is equal to or greater than a predetermined percentage of a maximum CPU usage; and the CPU usage is equal to or greater than the threshold CPU usage, for example wherein the predetermined percentage of a maximum CPU usage is 50%.

Clause 17. The method of clause 16, wherein the number of the second application data packets is zero

Clause 18. The method of clause 16 or 17, further comprising: receiving one or more other sequences from one or more other connections, each of the other sequences having a plurality of application data packets; comparing a priority of a connection for the sequence with priorities of the one or more other connections for the one or more other sequences; and determining the connection for the sequence has a highest priority, wherein: the threshold CPU usage is less than a predetermined percentage of a maximum CPU usage; and the CPU usage is less than the predetermined threshold percentage of CPU usage, for example wherein the predetermined percentage of a maximum CPU usage is 50%.

Clause 19. The method of any preceding clause, further comprising, prior to the determining of the second number of application data packets in the sequence, receiving a second message from the UWB device requesting for the second number of application data packets in the sequence to be transmitted.

Clause 20. The method of any preceding clause, wherein the message is a link layer message.

Clause 21. A method for adjusting data transfer in ultra-wideband (UWB) communication, comprising: transmitting one or more first application data packets as a first part of a sequence of application data packets, the sequence having a first number of application data packets; receiving, from a UWB device, a message containing a second number for the application data packets in the sequence, the second number being different from the first number; and adjusting a number of second application data packets to be transmitted as a second part of the sequence such that the second number of application data packets is to be transmitted as the sequence.

Clause 22. The method of clause 21 wherein: in response to the second number of application data packets being less than or equal to the first number of application data packets, the number of the second application data packet is between zero and a difference between the first number and the second number; and in response to the second number of application data packets being greater than the first number of application data packets, the number of the second application data packet is greater than the difference between the second number and the first number.

Clause 23. A method for optimizing data transfer in ultra-wideband (UWB) communication, comprising: transmitting a first number of application data packets; receiving acknowledgement messages for a second number of application data packets; and determining a transmitter status value based on at least one of the first number of application data packets or the second number of application data packets.

Clause 24. The method of clause 23, further comprising: retransmitting a third number of application data packets of which the acknowledgement messages are not received; receiving acknowledgement messages for a fourth number of retransmitted application data packets; and determining a fifth number of application data packets of which acknowledgement messages are not received, wherein the determining of the transmitter status value is further based on one or more of the third number of retransmitted application data packets, the fourth number of retransmitted application data packets, or the fifth number of application data packets.

Clause 25. The method of clause 23 or 24, wherein the transmitter status value comprises at least one of a ratio between the second number and the first number, a ratio between the fourth number and the first number, or a ratio between the fifth number and the first number.

Clause 26. The method of clause 25, further comprising transmitting a message having the transmitter status value to a UWB device.

Clause 27. The method of clause 26, wherein the message is a link layer message.

Clause 28. The method of clause 26 or 27, further comprising: determining a second transmitter status value after the transmitting of a previous transmitter status value; and transmitting a second message having the second transmitter status value after a predetermined period of time after the transmitting of the message.

Clause 29. The method of clause 26, 27 or 28, wherein the message is transmitted periodically.

Clause 30. The method of any of clauses 25 to 29, further comprising adjusting a modulation rate for transmitting a sixth number of application data packets based on the transmitter status value.

Clause 31. A method for optimizing data transfer in ultra-wideband (UWB) communication, comprising: receiving a transmitter status value indicating a transmission condition of a UWB device for a first time period; and allocating time slots for transmitting application data packets in a second time period subsequent to the first time period based on the transmitter status value.

Clause 32. The method of clause 31, wherein the transmitter status value comprises at least one of: a first ratio between a number of application data packets transmitted by the UWB device in the first time period and a number of application data packets of which acknowledgement messages are received after first transmissions by the UWB device, a second ratio between the number of application data packets transmitted by the UWB device in the first time period and a number of application data packets of which acknowledgement messages are received after retransmissions by the UWB device, or a third ratio between a number of application data packets of which acknowledgement messages are not received by the UWB device and the number of application data packets transmitted by the UWB device in the first time period and a number of application data packets of which acknowledgement messages are received after first transmissions by the UWB device.

Clause 33. The method of clause 32, further comprising not allocating time slots for retransmission to the UWB device in response to the first ratio being equal to 1.

Clause 34. The method of clause 31, 32 or 33, wherein the transmitter status value is received in a link layer message.

Those skilled in the art will recognize improvements and modifications to the illustrative embodiments of the present disclosure. All such improvements and modifications are considered within the scope of the concepts disclosed herein and the claims that follow.

## Claims

1. A method for optimizing data transfer in ultra-wideband, UWB, communication, comprising:

   receiving, from a UWB device, one or more first application data packets as a first part of a sequence of application data packets, the sequence having a first number of application data packets;

determining a receiver status value based on the one or more first application data packets; comparing the receiver status value to a threshold value;

determining a second number of application data packets for the sequence based on a difference between the receiver status value and the threshold value, the second number being different from the first number;

generating a message indicating the second number of application data packets for the sequence; and

transmitting the message to the UWB device.

2. The method of claim 1, comprising:

in response to the receiver status value being equal to or greater than the threshold value, decreasing or maintaining the first number such that the second number is less than or equal to the first number; and

in response to the receiver status value being less than the threshold value, increasing the first number such that the second number is greater than the first number.

3. The method of claim 2, wherein:

in response to the receiver status value being equal to or greater than the threshold value, decreasing the number of second application data packets to be less than a difference between the first number and a number of the first application data packets; and

in response to the receiver status value being less than the threshold value, increasing the number of second application data packets to be greater than the difference between the first number and the number of the first application data packets.

4. The method of claim 3, further comprising storing the one or more first application data packets in a memory, wherein the receiver status value comprises a storage space of the one or more first application data packets in the memory and the threshold value comprises a threshold storage space.

5. The method of claim 4, wherein the threshold storage space is one of a predetermined percentage of the memory or a predetermined percentage of a total storage space corresponding to the sequence of the first number of application data packets.

6. The method of claim 5, wherein:

the threshold storage space is equal to or greater than a predetermined percentage of the memory, or equal to or greater than the predetermined percentage of the total storage space corresponding to the sequence of the first number of application data packets; and

the storage space is equal to or greater than the threshold storage space.

7. The method of claim 5, wherein:

the threshold storage space is less than a predetermined percentage of the memory, or equal to or greater than the predetermined percentage of the total storage space corresponding to the sequence of the first number of application data packets; and

the storage space is less than the threshold storage space.

8. The method of any of claims 3-7, wherein:

the receiver status value comprises a throughput at a UWB control interface, UCI, computed based on the first application data packets; and the threshold value comprises a threshold bandwidth.

9. The method of claim 8, further comprising:

receiving one or more other sequences from one or more other connections, each of the other sequences having a plurality of application data packets;

computing a respective throughput at the UCI for each of the connection and other connections;

determining at least one of the throughputs at the UCI to be higher than the threshold bandwidth;

comparing a priority of a connection for the sequence with priorities of the one or more other connections for the one or more other sequences; and

determining the connection for the sequence has a lowest priority,

wherein the threshold bandwidth is equal to or greater than a predetermined percentage of a maximum throughput at the UCI.

10. The method of claim 9, further comprising:

receiving one or more other sequences from one or more other connections, each of the other sequences having a plurality of application data packets;

computing a respective throughput at the UCI for each of the connection and other connections;

determining at least one of the throughputs at the UCI to be lower than the threshold bandwidth;

comparing a priority of a connection for the sequence with priorities of the one or more other connections for the one or more other sequences; and

determining the connection for the sequence has a highest priority,

wherein the threshold bandwidth is less than a predetermined percentage of a maximum throughput at the UCI.

11. The method of any of claims 3-10, further comprising, prior to the determining of the number of second application data packets to be transmitted, receiving a message from the UWB device requesting for an adjustment of a bitrate.

12. The method of any of claims 3-11, wherein:

the receiver status value comprises a central processing unit, CPU, usage; and
the threshold value comprises a predetermined threshold percentage of CPU usage.

13. The method of claim 12, further comprising:

receiving one or more other sequences from one or more other connections, each of the other sequences having a plurality of application data packets;
comparing a priority of a connection for the sequence with priorities of the one or more other connections for the one or more other sequences; and
determining the connection for the sequence has a lowest priority, wherein:

the threshold CPU usage is equal to or greater than a predetermined percentage of a maximum CPU usage; and
the CPU usage is equal to or greater than the threshold CPU usage.

14. The method of claim 12, further comprising:

receiving one or more other sequences from one or more other connections, each of the other sequences having a plurality of application data packets;
comparing a priority of a connection for the sequence with priorities of the one or more other connections for the one or more other sequences; and
determining the connection for the sequence has a highest priority, wherein:

the threshold CPU usage is less than a pre-

determined percentage of a maximum CPU usage; and
the CPU usage is less than the predetermined threshold percentage of CPU usage.

15. The method of any preceding claim, further comprising, prior to the determining of the second number of application data packets in the sequence, receiving a second message from the UWB device requesting for the second number of application data packets in the sequence to be transmitted.

FIG. 1A

EP 4 415 419 A1

**FIG. 1B**

EP 4 415 419 A1

FIG. 1C

EP 4 415 419 A1

EP 4 415 419 A1

200

UWB Device 1                    UWB Device 2

202-1
Application Data PDU ──────────▶

                                              202-1 ⎤
204                                                │
◀────── Rx Status PDU                          202  ⎬ 202
                                              202-1 ⎦

202-2
Application Data PDU ──────────▶

**FIG. 2A**

201

203

Message Type = Rx Status

205

Message Header

207

Rx Status Value:
LL Window Size

**FIG. 2B**

EP 4 415 419 A1

300

UWB Device 1                                    UWB Device 2

302

Application Data PDU

306

ACK

304

Tx Status PDU

**FIG. 3A**

EP 4 415 419 A1

| Message Type = Tx Status | Message Header | Tx Status Value: Tx Statistics |
|---|---|---|
| 303 | 305 | 307 |

301

**FIG. 3B**

310

| | |
|---|---|
| Controllee 1 | 314-1 |
| Controlee 2 | 314-2 |
| Controller : send ACK to controlee1 | 314-3 |
| Controller : to send ACK to controlee 2 | 314-4 |
| Controlee 1 (opportunity for ReTx) | 314-5 |
| Controlee 2 (opportunity for ReTx) | 314-6 |
| Controlee3 | 314-7 |
| ... | |

......

312

| | |
|---|---|
| Controller : to send ACK to controlee 3 | 316-1 |
| Controlee3 (opportunity for ReTYx) | 316-2 |
| | |
| .... | |

**FIG. 3C**

EP 4 415 419 A1

FIG. 3D

**FIG. 4A**

transmit one or more first application data packets as a first part of a sequence of application data packets, the sequence having a first number of application data packets — 403

receive, from a UWB device, a message containing a second number for the application data packets in the sequence, the second number being different from the first number — 405

adjust a number of second application data packets to be transmitted as a second part of the sequence such that the second number of application data packets is to be transmitted as the sequence — 407

**FIG. 4B**

502

transmit a first number of application data packets

504

receive acknowledgement messages for a second number of application data packets

506

determine a transmitter status value based on at least one of the first number of application data packets or the second number of application data packets

**FIG. 5A**

503

receive a transmitter status value indicating a transmission condition of a UWB device for a first time period

505

allocate time slots for transmitting application data packets in a second time period subsequent to the first time period based on the transmitter status value

**FIG. 5B**

Europäisches
Patentamt

European
Patent Office

Office européen
des brevets

# EUROPEAN SEARCH REPORT

Application Number

EP 24 30 5209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 6 554807 B2 (NEC CORP)<br>7 August 2019 (2019-08-07)<br>* paragraph [0025] - paragraph [0034] *<br>* paragraph [0040] *<br>* paragraph [0045] - paragraph [0051] *<br>* paragraph [0063] *<br>* paragraph [0066] *<br>* paragraph [0150] - paragraph [0161] *<br>- - - - - | 1-10,<br>12-14<br>11,15 | INV.<br>H04W28/02<br>H04L47/263<br>H04L47/27<br>H04L47/35 |
| Y<br>A | EP 1 878 155 B1 (LG ELECTRONICS INC [KR])<br>4 December 2013 (2013-12-04)<br>* paragraph [0026] - paragraph [0028];<br>figure 3 *<br>* paragraph [0035] - paragraph [0038] *<br>* paragraph [0053] *<br>* paragraph [0071] *<br>* paragraph [0102] - paragraph [0108] *<br>- - - - - | 11,15<br>1-10,<br>12-14 | |
| A | CN 1 972 284 A (DATANG MOBILE COMM EQUIP<br>CO [CN]) 30 May 2007 (2007-05-30)<br>* paragraph [0014] - paragraph [0017] *<br>* paragraph [0023] *<br>* paragraph [0037] - paragraph [0040] *<br>* paragraph [0050] *<br>- - - - - | 1-15 | TECHNICAL FIELDS SEARCHED (IPC)<br><br>H04W<br>H04L |

The present search report has been drawn up for all claims

| Place of search | Date of completion of the search | Examiner |
|---|---|---|
| The Hague | 6 June 2024 | Tortelli, Michele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 5209

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2024

| Patent document cited in search report | | Publication date | Patent family member(s) | | Publication date |
|---|---|---|---|---|---|
| JP 6554807 | B2 | 07-08-2019 | JP | 6554807 B2 | 07-08-2019 |
| | | | JP | 2016146517 A | 12-08-2016 |
| EP 1878155 | B1 | 04-12-2013 | AU | 2006241604 A1 | 09-11-2006 |
| | | | BR | PI0612473 A2 | 23-11-2010 |
| | | | EP | 1878155 A2 | 16-01-2008 |
| | | | JP | 4934666 B2 | 16-05-2012 |
| | | | JP | 2008541543 A | 20-11-2008 |
| | | | US | 2008294958 A1 | 27-11-2008 |
| | | | WO | 2006118418 A2 | 09-11-2006 |
| CN 1972284 | A | 30-05-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63512210